# FASCICULE DE BREVET EUROPEEN

(11) **EP 0 593 336 B1**
(45) Date de publication et mention de la délivrance du brevet: **02.08.2000**
(21) Numéro de dépôt: 93402452.2
(22) Date de dépôt: 06.10.1993
(51) Int. Cl.: F16B 21/08, H01R 12/16

(54) **Attache amovible pour solidariser un support plat à un élément et connecteur la comportant**
Lösbare Befestigung zum Verbinden einer Trägerplatte mit einem Bauelement und Verbinder mit einer solchen Befestigung
Fastener for releasably fastening a support plate to a component and a connector comprising such a fastener

(30) Priorité: 13.10.1992 FR 9212208
(43) Date de publication de la demande: 20.04.1994
(73) Titulaire: FRAMATOME CONNECTORS FRANCE Société anonyme, 78000 Versailles (FR)
(72) Inventeur: Champion, Patrick, F-72100 Le Mans (FR); Thenaisie, Jacky, F-72100 Le Mans (FR)
(74) Mandataire: Keib, Gérard

(56) Documents cités:
- DE-A- 4 016 890
- DE-A- 4 032 565
- FR-A- 2 668 214
- GB-A- 1 017 929
- GB-A- 2 239 135
- US-A- 3 774 142
- US-A- 4 765 036
- US-A- 4 889 502
- US-A- 5 108 308
- US-A- 5 108 312

## Description

La présente invention a pour objet une attache amovible pour solidariser au moins un support plat à un élément.

On connaît en particulier dans le domaine de la connectique, une technique pour solidariser un support plat, tel qu'un circuit imprimé, à un élément tel qu'un corps isolant et mettant en oeuvre un pion déformable à chaud solidaire du corps isolant. Par déformation du pion avec un poinçon métallique porté à température élevée, on obtient un rivet solidarisant le support plat et l'élément mais de manière indémontable.

Il est connu du brevet US-A-5 108 308 (Northcraft et al) une attache amovible constituée d'un élément tubulaire comprenant des doigts élastiques de rétention d'un support plat, cet élément étant monté sur un pion porté par le connecteur, le pion assurant de plus le maintien du support plat par écartement des doigts élastiques de l'élément tubulaire.

Une disposition proche de cette dernière est également divulguée par le brevet US-A-5 108 312 (Sampson).

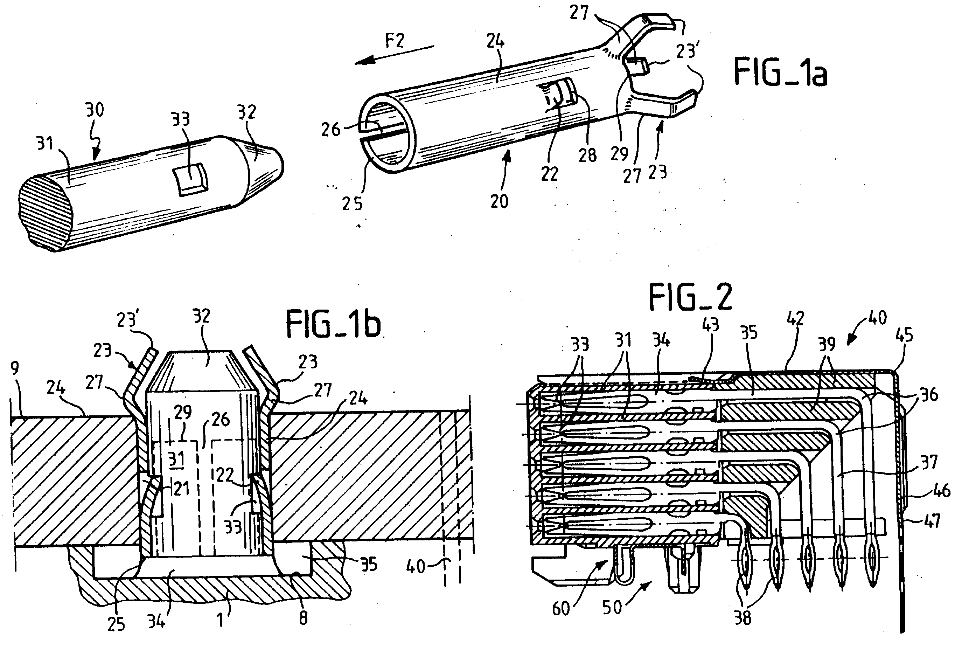

Les figures 1a et 1b annexées à la présente demande illustrent un état de la technique de ce type.

Sur les figures 1a et 1b, un corps central 1 présente un pion cylindrique désigné par le repère général 30 et présentant une région cylindrique 31, au moins un logement 33 et une extrémité 32 de forme tronconique. Des éléments de contact 40 sont logés (par exemple par sertissage) dans le corps isolant 1, et traverse un circuit imprimé 9. Le pion cylindrique 30 est solidaire du corps central 1 et est fabriqué de manière analogue à un pion déformable à chaud de l'art antérieur. Une pièce 20 en métal présente un corps cylindrique creux 24 présentant une échancrure 26 et au moins un bras élastique 22 destiné à s'encliqueter dans le logement 33. La pièce 20 présente une extrémité de base 25 venant en butée intérieure à la base du pion 30, et une extrémité supérieure 29 qui se prolonge par des bras élastiques 23, ici au nombre de trois répartis à 120°, mais pourraient être par exemple au nombre de quatre répartis à 90°. Le bras élastique 23 présente une région proximale 27 s'étendant vers l'extérieur, et une région distale 23' formant un coude avec la région 27, la région distale 23' étant dirigée vers l'intérieur. La région proximale 27 fait office de butée d'encliquetage pour maintenir en place le circuit imprimé 9 en butée contre une face supérieure du corps central isolant 1. Pour solidariser un circuit imprimé 9 à un corps isolant 1 présentant un ou plusieurs pions cylindriques 30, on introduit tout d'abord le corps cylindrique 20 dans le sens de la flèche F2 jusqu'à encliquetage des languettes 22 dans les logements 33. Ensuite, l'ouverture (ou les ouvertures) 21 du circuit imprimé 9 est présentée à l'extrémité distale 23' du bras élastique 23. La forme repliée vers l'intérieur des extrémités distales 23' permet un effet de chanfrein lors de l'introduction de l'ouverture 21. Les bras élastiques 23 sont repoussés vers l'intérieur, ce qui permet l'introduction du circuit imprimé 9 jusqu'à ce qu'il vienne en butée contre la face du corps central 1 dans une position dans laquelle se produit un phénomène d'encliquetage, sur la face 42 du circuit imprimé 9, de l'extrémité proximale 27 par déploiement élastique des bras 23 vers l'extérieur. La présence d'une partie tronconique 32 à l'extrémité du pion cylindrique 30 permet de définir une butée au repliement des extrémités distales 23' des bras élastiques 23 de manière à éviter la détérioration accidentelle de ceux-ci lors de l'introduction du circuit imprimé 9. Il convient de rappeler en effet que ces pièces peuvent être de très petites dimensions. En particulier le diamètre du pion 30 est de l'ordre de 1 mm.

La pièce 20 peut être démontée en la faisant pivoter autour de l'axe du cylindre creux 24 de manière à dégager le (ou les) bras élastique(s) 22 du (ou des) logement(s) 33.

La fente 26 permet de faciliter l'introduction du pion cylindrique 30 dans le corps cylindrique 24 de la pièce 20 par écartement des bords de la fente 26.

Le dispositif permet la démontabilité du circuit imprimé 9 et autorise soit un mode de fixation amovible avec un corps cylindrique creux 24, soit l'utilisation du pion cylindrique 30 comme pion déformable à chaud. Il suffit pour cela de lui donner le profil convenable.

Tout en conservant les avantages des dispositifs de l'art connu et notamment de l'art connu du type qui vient d'être rappelé, la présente invention vise la réalisation d'un dispositif de fixation à moyens de rétention décalés.

Elle concerne ainsi une attache amovible pour solidariser au moins un support plat tel qu'un support de circuit, à un élément ladite attache amovible comportant un dispositif de rétention axiale présentant un premier moyen de rétention assurant sa rétention sur un premier pion porté par ledit élément et au moins un deuxième moyen de rétention assurant la rétention du support plat, le premier et le deuxième moyens de rétention étant décalés latéralement l'un par rapport à l'autre, caractérisé en ce que le deuxième moyen de rétention est disposé sur au moins une partie du pourtour d'au moins un deuxième pion porté par ledit élément.

Le dispositif de rétention axiale est avantageusement électriquement conducteur et le support plat peut alors comporter au moins un trou métallisé permettant d'assurer la continuité électrique entre l'attache amovible et le support plat.

Le deuxième moyen de rétention peut avantageusement présenter au moins un élément élastique disposé de manière telle que, lorsqu'il est introduit dans le support plat, il se déforme de manière à produire un verrouillage à force, notamment en venant en butée contre le deuxième pion.

Selon un mode de réalisation préféré, l'élément élastique est un arceau en forme de V dont les extrémités proximales des branches sont solidaires de l'attache.

L'attache peut constituer une plaque de blindage.

Le premier élément de rétention peut être verrouillé à force sur le premier pion.

D'autres caractéristiques et avantages de l'invention apparaîtront mieux à la lecture de la description qui va suivre, donnée à titre d'exemple non limitatif, en liaison avec les dessins qui représentent :
- les figures 1a et 1b, respectivement en perspective et en coupe partielle, un état de la technique connu similaire à celui divulgué par le brevet US-A-5 108 308 précité.
- la figure 2, un connecteur selon un mode préféré de réalisation de l'invention,
- la figure 3a étant un détail en vue de dessous de la figure 2, et
- les figures 3b et 3c, les coupes respectivement selon A et selon B, de la figure 3a.

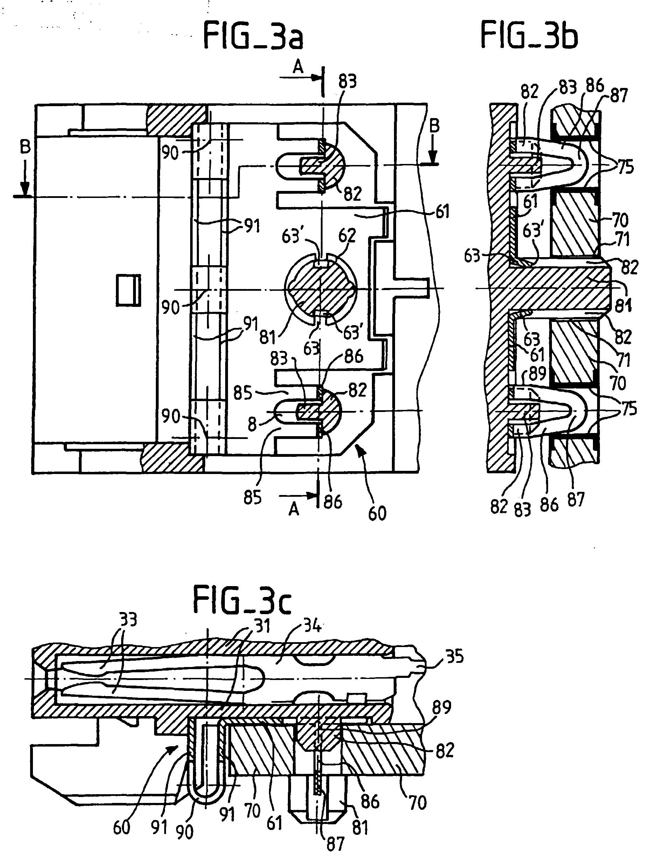

La figure 2 représente un connecteur 40 de raccordement entre un connecteur mâle et une carte fille, connecteur réalisé selon un mode préféré de l'invention.

Il comporte un corps isolant avant 31 présentant des ouvertures dans lesquelles sont disposés des contacts femelles 33 se prolongeant vers l'arrière par des conducteurs cylindriques 35 formant un coude à 90° en 36 et présentant une partie arrière 37 prolongée par des contacts mâles 38 à insertion forcée. Les contacts cylindriques 35, 36, 37 sont noyés dans un bloc isolant arrière désigné par le repère général 39. Un élément de blindage (repère général 40) comporte une région arrière 46 se terminant par des contacts à insertion forcée ("press fit") 47, et une région avant 42 faisant un angle de 90° (pliure 45) avec la région arrière 46. La région avant 42 se termine par une région de contact 43.

Au voisinage des contacts mâles 38 et dans la direction avant du connecteur 40, est disposé un dispositif de fixation désigné par le repère général 50 et permettant de solidariser un support plat tel qu'un circuit imprimé (carte fille 70) au connecteur 40. Ce dispositif de fixation comprend une attache amovible désignée par le repère général 60.

Comme le montrent plus particulièrement les figures 3a à 3c, l'attache amovible 60 est constituée par une plaque métallique présentant dans une région médiane, une ouverture à partir de laquelle deux doigts incurvés 63 se dirigent vers l'extérieur. Lors du montage de l'attache 60, la plaque 60 est translatée parallèlement à l'axe d'un pion 81 solidaire du corps isolant avant 31, les doigts 63 étant logés dans des rainures 82 du pion 81 disposées à 180°. Les doigts 63 assurent un verrouillage à force de la plaque étant donné que leur extrémité 63' vient exercer une pression donnée sur le fond des rainures respectives 82. Une force d'extraction appliquée à la plaque 60 force les doigts 63 à s'arc-bouter au fond des rainures 82 pour s'opposer à une extraction. Cette extraction reste toutefois possible sans détériorer les pièces, mais on comprendra que ce dispositif n'est pas prévu pour de nombreux démontages.

La plaque métallique 60 (réalisant ici une fonction de plaque de blindage) présente en outre deux dispositif élastiques présentant deux bras 85 s'étendant dans le plan de la plaque 60 et séparés par un espace, et se prolongeant par un arceau 86 replié à 90° vers l'extérieur, cet arceau 86 se rétrécissant progressivement jusqu'à son sommet arrondi 87, ce qui lui confère une forme générale de V.

L'espace entre les bras 85, est partiellement occupé par un prolongement 83 d'un pion 82 de section semi-circulaire. La plaque 60, une fois mise en place comme indiqué précédemment, la carte fille 70 est présentée et positionnée de manière que le pion 81 passe dans son ouverture 71 et que les pions (82, 83) et l'arceau 86 passent par ses trous métallisés 75. Comme le montre la figure 3b, la largeur de l'arceau 86 à sa naissance (partie rectiligne 89) est sensiblement supérieure au diamètre des trous métallisés 75, ce qui permet une fonction de verrouillage à force par repliement élastique de l'arceau 86 en direction du prolongement 83 jusqu'à venir éventuellement en butée contre celui-ci. On a réalisé ici également un verrouillage autorisant un ou plusieurs démontages. La force de démontage peut être choisie, de manière que la carte fille 70 puisse être désassemblée avec une force donnée, puis, que l'attache 60 puisse être ensuite démontée avec une force supérieure à ladite force donnée.

On remarquera que, s'il n'est pas désiré, de contact électrique, les trous 75 n'ont pas besoin d'être métallisés. La plaque 60 peut être en matériau non conducteur.

A titre de variante, l'arceau 86 peut être remplacé par deux bras rectilignes ou incurvés séparés l'un de l'autre (c'est-à-dire sans le sommet 87).

## Revendications

1. Attache amovible pour solidariser au moins un support plat tel qu'un support de circuit à un élément ladite attache amovible comportant un dispositif de rétention axiale (60) présentant un premier moyen de rétention (63) assurant sa rétention sur un premier pion (81) porté par ledit élément (31) et au moins un deuxième moyen de rétention (86) assurant la rétention du support plat (70), le premier (63) et le deuxième (86) moyens de rétention étant décalés latéralement l'un par rapport à l'autre, caractérisée en ce que le deuxième moyen de rétention (86) est disposé sur au moins une partie du pourtour d'au moins un deuxième pion (82, 83) porté sur ledit élément (31).

2. Attache amovible selon la revendication 1, caractérisée en ce qu'elle constitue une plaque de blindage.

3. Attache amovible selon la revendication 1 ou 2, caractérisée en ce que le deuxième moyen de rétention (86) est disposé en butée sur le deuxième pion (82, 83) porté par ledit élément.

4. Attache amovible selon la revendication 3, caractérisé en ce que le dispositif de rétention axial (60) est électriquement conducteur et en ce que le support plat (70) comporte au moins un trou métallisé (76) permettant d'assurer la continuité électrique entre l'attache amovible (60) et le support plat (70).

5. Attache amovible selon une des revendications 3 ou 4, caractérisée en ce que le deuxième moyen de rétention présente au moins un élément élastique (86, 87) disposé de manière telle que, lorsqu'il est introduit dans le support plat (70) il se déforme de manière à produire un verrouillage à force.

6. Attache amovible selon la revendication 5, caractérisée en ce que l'élément élastique est un arceau (86, 87) en forme de V dont les branches (89) sont solidaires de l'attache.

7. Attache amovible selon une des revendications précédentes, caractérisée en ce que le premier élément de rétention (63) est verrouillé à force sur le premier pion.

8. Connecteur caractérisé en ce qu'il comporte une attache amovible selon une des revendications précédentes.

## Claims

1. Assembly comprising a flat support, such as a circuit support, an element and a removable fastener for fastening at least the said flat support (70) to the said element (31), the said removable fastener including an axial retention device (60) having a first retention means (63) ensuring its retention on a first stud (81) borne by the said element (31) and at least a second retention means (86) ensuring retention of the flat support (70), the first (63) and the second (86) retention means being laterally offset one with respect to the other, characterized in that the second retention means (86) is placed on at least part of the perimeter of at least a second stud (82, 83) borne by the said element (31).

2. Assembly according to Claim 1, characterized in that the removable fastener constitutes a screening plate.

3. Assembly according to Claim 1 or 2, characterized in that the second retention means (86) is placed so as to butt against the second stud (82, 83) borne by the said element.

4. Assembly according to Claim 3, characterized in that the axial retention device (60) is electrically conducting and in that the flat support (70) includes at least one plated-through hole (76) making it possible to ensure that there is electrical continuity between the removable fastener (60) and the flat support (70).

5. Assembly according to either of Claims 3 and 4, characterized in that the second retention means have at least one resilient element (86, 87) placed in such a way that, when it is inserted into the flat support (70), it deforms so as to produce forcible locking.

6. Assembly according to Claim 5, characterized in that the resilient element is a V-shaped bow (86, 87) whose branches (89) are attached to the fastener.

7. Assembly according to one of the preceding claims, characterized in that the first retention element (63) is forcibly locked onto the first stud.

8. Connector characterized in that it includes an assembly according to one of the preceding claims.

## Patentansprüche

1. Lösbare Befestigung, um mindestens einen flachen Träger, wie zum Beispiel einen Schaltungsträger, fest mit einem Element zu verbinden, wobei die lösbare Befestigung eine Vorrichtung für den axialen Halt (60) aufweist, die ein erstes Haltemittel (63), das ihren Halt auf einem ersten, auf dem Element (31) angeordneten Stift (81) gewährleistet, und mindestens ein zweites Haltemittel (86) besitzt, das den Halt des flachen Trägers (70) gewährleistet, wobei das erste (63) und das zweite Haltemittel (86) seitlich zueinander versetzt sind, dadurch gekennzeichnet, daß das zweite Haltemittel (86) auf mindestens einem Teil des Umfangs mindestens eines zweiten, auf dem Element (31) befindlichen Stifts (82, 83) angeordnet ist.

2. Lösbare Befestigung nach Anspruch 1, dadurch gekennzeichnet, daß sie eine Abschirmplatte bildet.

3. Lösbare Befestigung nach Anspruch 1 oder 2, dadurch gekennzeichnet, daß das zweite Haltemittel (86) in Anschlag auf dem zweiten, auf dem Element angeordneten Stift (82, 83) angeordnet ist.

4. Lösbare Befestigung nach Anspruch 3, dadurch gekennzeichnet, daß die Vorrichtung für den axialen Halt (60) elektrisch leitend ist und daß der flache Träger (70) mindestens ein mit Metall überzogenes Loch (76) aufweist, das die elektrische Kontinuität zwischen der lösbaren Befestigung (60) und dem flachen Träger (70) gewährleisten kann.

5. Lösbare Vorrichtung nach einem der Ansprüche 3 oder 4, dadurch gekennzeichnet, daß das zweite Haltemittel mindestens ein elastisches Element (86, 87) aufweist, das so angeordnet ist, daß es, wenn es in den flachen Träger (70) eingeführt wird, sich so verformt, daß eine Verriegelung unter Krafteinwirkung erzeugt wird.

6. Lösbare Befestigung nach Anspruch 5, dadurch gekennzeichnet, daß das elastische Element ein V-förmiger Bügel (86, 87) ist, dessen Schenkel (89) fest mit der Befestigung verbunden sind.

7. Lösbare Befestigung nach einem der vorhergehenden Ansprüche, dadurch gekennzeichnet, daß das erste Halteelement (63) unter Krafteinwirkung auf dem ersten Stift verriegelt wird.

8. Verbinder, dadurch gekennzeichnet, daß er eine lösbare Befestigung nach einem der vorhergehenden Ansprüche aufweist.
